# EUROPEAN PATENT APPLICATION

(11) **EP 4 560 143 A1**
(43) Date of publication of application: **28.05.2025**
(21) Application number: 24809956.6
(22) Date of filing: 29.01.2024
(51) Int. Cl.: F04D 29/046, F04D 13/06, F04D 29/06

(54) **BEARING RETAINER FOR PUMP AND WET-OPERATION PUMP UNIT HAVING SAME**

(30) Priority: 24.05.2023 CN 202310590975
(71) Applicant: Shanghai Moons' Electric Co., Ltd, Shanghai 201107 (CN)
(72) Inventor: CHEN, Yuan, Shanghai 201107 (CN); JIN, Wanbing, Shanghai 201107 (CN)
(74) Representative: Winter, Brandl - Partnerschaft mbB
(86) International application number: PCT/CN2024/074498
(87) International publication number: WO 2024/239706

(57) **Abstract**

The present invention relates to a bearing support for pump and a wet-running pump unit with such bearing support. The bearing support is mounted on a wet-running pump unit, and the wet-running pump unit includes a pump head assembly, a shield can, a bearing support, a front bearing, and a rotor assembly, where the bearing support includes a radial extension disk surface; and the radial extension disk surface is welding connected to a shield-can fitting surface, and the radial extension disk surface or the shield-can fitting surface is provided with a through slot for forming a first fluid channel. Compared with the prior art, the present invention has advantages such as improved manufacturing efficiency, reduced costs, increased assembly precision, and enhanced efficiency of liquid inflow into the shield can.

## Description

### TECHNICAL FIELD

The present invention relates to a wet-running pump unit, particularly to a bearing support for pump and a wet-running pump unit with such bearing support.

### BACKGROUND

In a heating and cooling system, a centrifugal pump operates in a liquid environment. A typical feature of a wet-running centrifugal pump is that a rotor and a bearing support system are disposed in a shield can, converting dynamic sealing into static sealing and effectively preventing liquid leakage. The rotor and bearing of the centrifugal pump are assembled in the shield can, and the shield can is in close contact with a stator. A motor stator is one of the main heat sources during the operation of a pump unit. When the centrifugal pump operates, the shield can is filled with an operating fluid. The heat in the stator is transferred through the shield can to the operating liquid, and the liquid in the shield can exchange heat with a cooling liquid in the system through a circulation channel, taking away the heat, thereby cooling and lubricating the bearing.

Typically, the bearing support of the centrifugal pump is mounted on the shield can, supporting the bearing and isolating the shield can from the pump chamber, to provide two relatively sealed independent chambers, namely an impeller chamber and a rotor chamber. When the pump does not operate, due to a temperature difference and the thermal expansion of the liquid, the liquid axially flows along a gap film between a rotary shaft and a radial bearing, easily depositing limescale between the rotary shaft and radial bearing. This causes difficulty in the rotation of the rotary shaft and increases the resistance to starting the pump unit. When the pump unit operates, an impeller rotates in the impeller chamber. To drive the liquid path circulation within the pump, the liquid needs to enter the rotor chamber from the impeller chamber to cool the motor and then return to the impeller chamber. It is necessary to reasonably arrange the components of the pump unit and adjust the structures of the components, especially a bearing support member that isolates the shield can from the pump chamber, thus providing a feasible fluid channel for the liquid path circulation of cooling the motor.

For the existing pump liquid path, when the pump operates, the impeller rotates in the impeller chamber, forming a high-pressure region and a low-pressure region in a pump volute. The pressure difference between the high-pressure region and the low-pressure region provides a driving force for the liquid to flow in the channel. Because the liquid contains hard particles such as magnetite and calcified substances, when the liquid axially flows in a gap between the bearing and the rotary shaft, hard particles can enter and deposit in the gap therebetween, causing difficulties in starting or operating. Additionally, when the pump unit is mounted horizontally, the water passing through the gap between the bearing and the rotary shaft cannot fill up the rotor chamber, that is, the shield can, and air cannot be completely expelled. This results in a series of problems such as low pump operation efficiency, dry friction of the bearing, improper motor cooling, and water hammer and noise caused by the rotor for driving the liquid to collide within the shield can chamber.

Upon reviewing prior art, Chinese Patent Publication No. CN104040182A has disclosed a pump unit design that includes a disc-shaped bearing seat made of metal, revealing a structure where a centering surface of the bearing seat is in contact with and centered on a pump head housing. However, this patent has not provided a specific solution for the concentric assembly of a front bearing and a shield can. Moreover, Chinese Patent Publication No. CN 113137396 A has disclosed a bearing retainer that is provided with a radially external segment extending radially outward from an internal segment. The radial internal segment defines at least one first axial fluid channel, and the radial external segment defines at least one second axial fluid channel, forming a fluid flow path constructed by the fluid channels. However, the use of the first fluid channel provided by this bearing retainer includes an axial liquid path flowing through a gap between a rotary shaft and a bearing, causing limescale deposition in the gap, thus leading to serious problems. The structure of the second fluid channel is an axial fluid channel, requiring additional drilling in an axial end face of the bearing retainer through a drilling process of electrical discharge machining or laser ablation drilling, consuming manpower, material resources, and financial resources.

Therefore, to resolve the above deficiencies of the prior art, it is necessary to design a bearing support member with good performance, combined with a well-designed fluid path and fluid channels.

### SUMMARY

An objective of the present invention is to overcome the deficiencies of the prior art by providing a bearing support for pump and a wet-running pump unit with such bearing support, which not only improves the manufacturing efficiency, reduces the costs, and increases the assembly precision, but also enhances the efficiency of liquid inflow into a shield can.

The objective of the present invention can be implemented by using the following technical solutions:
According to an aspect of the present invention, a bearing support for pump is provided. The bearing support is mounted on a wet-running pump unit, and the wet-running pump unit includes a pump head assembly, a shield can, a bearing support, a front bearing, and a rotor assembly, where the bearing support includes a radial extension disk surface; and
the radial extension disk surface is welding connected to a shield-can fitting surface, and the radial extension disk surface or the shield-can fitting surface is provided with a through slot for forming a first fluid channel.

According to a preferred technical solution, the through slot is connected to a pump volute high-pressure region of the pump head assembly, and a liquid in the pump volute high-pressure region of the pump head assembly enters the shield can through the fluid channel and fills up the shield can.

According to a preferred technical solution, the radial extension disk surface is provided with an arched portion that avoids the through slot.

According to a preferred technical solution, the rotor assembly is immersed in the liquid in the shield can, and the liquid flows through a pinhole provided in a rotary shaft of the rotor assembly to a suction opening of the pump head assembly, forming a second fluid channel for the liquid in the shield can.

According to a preferred technical solution, the bearing support for pump further includes a second flange connected to the arched portion, a first flange connected to the second flange, and a bearing housing formed by the first flange.

According to a preferred technical solution, the first flange is radially provided with a step avoidance space fitting with a first inner diameter of the shield can, and the second flange has the bearing housing as a coaxial reference and is in fitting with the first inner diameter of the shield can.

According to a preferred technical solution, the bearing housing is in interference fitting with the front bearing, and the front bearing is concentrically assembled with the second flange.

According to a preferred technical solution, the radial extension disk surface, the through slot, the arched portion, the first flange, the second flange, and the bearing housing are components formed through integral metal stamping and drawing.

According to a preferred technical solution, there is one or more through slots.

According to another aspect of the present invention, a wet-running pump unit with a bearing support is provided, including a pump head assembly, an impeller, an impeller cover, a flat sealing ring, a shield can, a front bearing, an axial locking bearing, an axial locking bearing rubber sleeve, a rear bearing, a rear bearing support member, a rotor assembly, and a stator assembly, the rotor assembly includes a rotary shaft and a permanent magnet, and the wet-running pump unit further includes the bearing support for pump.

Compared with the related art, the present invention has the following advantages.
(1) Compared with the conventional fluid channel structure, that is, an axial opening, the radial fluid channel structure of the present invention is more conducive to liquid inflow into the shield can and expelling more gas from the rotor chamber, that is, the shield can. Through the radial fluid channel designed in the present invention, even all the gas in the shield can can be expelled and the shield can is filled up with the liquid, allowing for better operating efficiency of the pump and lubrication effect of the liquid on the bearing.
(2) In the conventional processing method for, for example, adding an axial opening in an axial fluid channel during the processing, the axial drilling process is electric erosion drilling or laser ablation drilling, which is time-consuming and costly. The radial fluid channel of the bearing support for pump in the present invention is made through a stamping process. The radial fluid channel may be a structure formed by stamping holes or slots in the radial extension disk surface during the stamping process, and integrally stamped with the radial extension disk surface, the arched portion, the first flange, the second flange, and the bearing housing, greatly reducing the manufacturing costs and improving the production efficiency.
(3) The portion of the radial extension disk surface facing the bearing housing in the present invention is designed as an arched structure. The arched portion enhances the overall rigidity of the bearing support and reduces deformation of the bearing support under fluid pressure.
(4) The bearing housing in the present invention is in interference fitting with the front bearing. The deformation of the first flange caused by the interference fitting is accommodated by the step avoidance space, ensuring that the slight clearance fitting dimension between the second flange and the first inner diameter is not interfered with or damaged.
(5) The present invention improves the manufacturing efficiency, reduces the costs, increases the assembly precision, and enhances the efficiency of liquid inflow into the shield can.

### BRIEF DESCRIPTION OF THE DRAWINGS

FIG. 1 is a schematic structural diagram of a wet-running pump unit including a bearing support for pump according to the present invention.
FIG. 2 is a schematic cross-sectional view of the bearing support for pump according to the present invention.
FIG. 3 is a schematic structural diagram of the bearing support for pump according to the present invention.
FIG. 4 is a schematic diagram of the bearing support for pump being sealingly welded to a shield can according to the present invention.
FIG. 5 is a schematic structural diagram of the shield can according to the present invention.
FIG. 6 is a schematic structural diagram of a fluid channel provided on the shield can according to the present invention.
FIG. 7 is a schematic diagram of a fluid and a channel according to the present invention.

Numeral references: 1. pump head assembly, 2. impeller, 3. impeller cover, 4. flat sealing ring, 5. shield can, 6. bearing support, 7. front bearing, 8. axial locking bearing, 9. axial locking bearing rubber sleeve, 10. rear bearing, 11. rear bearing support member, 12. rotor assembly, 13. stator assembly, 14. rotary shaft, 15. permanent magnet, 16. radial extension disk surface, 17. through slot, 18. arched portion, 19. first flange, 20. second flange, 21. bearing housing, 22. shield-can fitting surface, 23. pump volute high-pressure region, 24. first inner diameter, 25. pinhole, 26. suction opening, S1. first fluid channel, S2. second fluid channel, and T1. step avoidance space.

### DETAILED DESCRIPTION OF THE EMBODIMENTS

The technical solutions of the embodiments of the present invention are clearly described below with reference to the accompanying drawings of the embodiments of the present invention. Apparently, the described embodiments are some rather than all of the embodiments of the present invention. All other embodiments obtained by a person of ordinary skill in the art on the basis of the embodiments of the present invention without creative efforts shall fall within the protection scope of the present invention.

### Embodiment 1

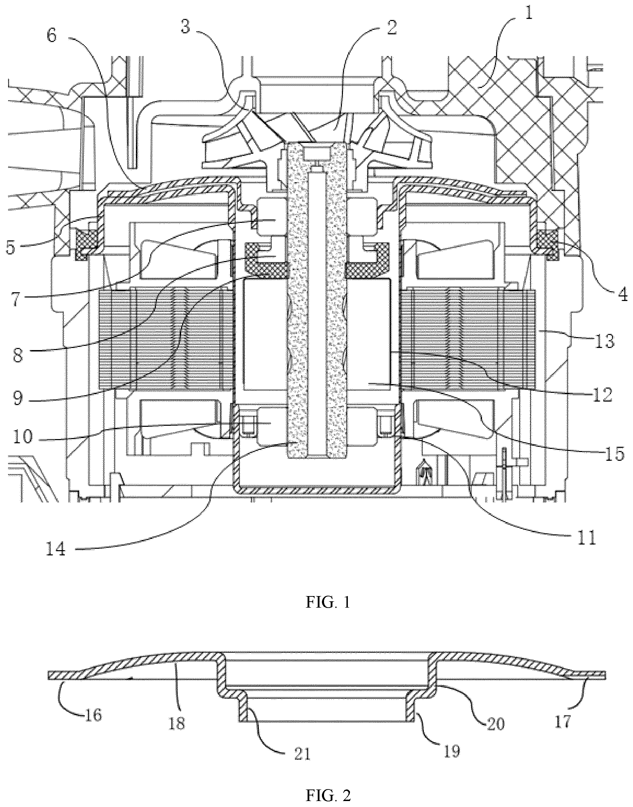

The present invention provides a bearing support for pump, and the bearing support for pump is mounted on a wet-running pump unit. The wet-running pump unit includes a pump head assembly, a shield can, a front bearing, and a rotor assembly. As shown in FIGs. 2, 3, and 4, the bearing support for pump includes a radial extension disk surface 16, a through slot 17 provided in the radial extension disk surface, an arched portion 18 that avoids the through slot, a first flange 19, a second flange 20, and a bearing housing 21. There may be one or more through slots 17 in the radial extension disk surface 16, and its shape is not constrained, as long as it forms a through shape. The through slot 17 and the shield-can fitting surface 22 avoid sealing connection to form a radial first fluid channel S1. The radial fluid channel is opposite the axial fluid channel and can be completely unaffected by the mounting position of the pump unit.

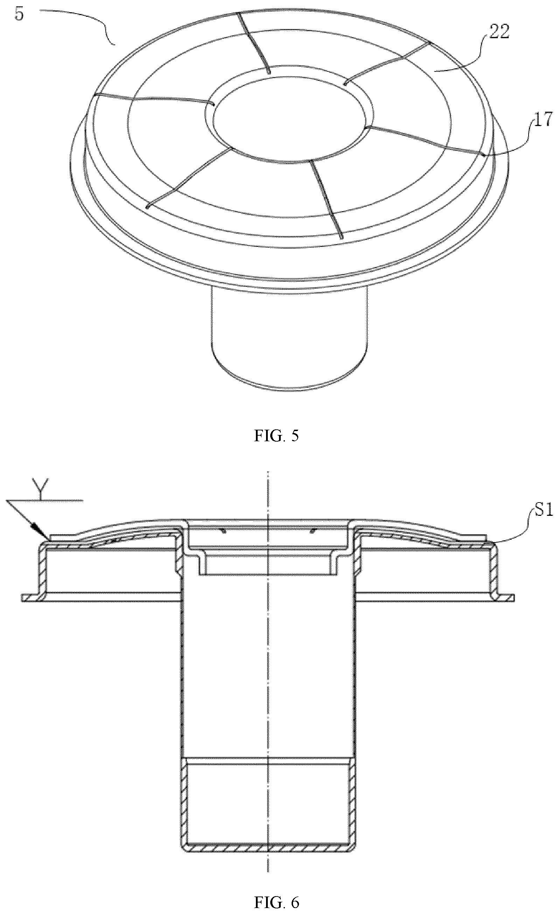

As shown in FIGs. 5 and 6, during specific implementation, the shield can may also be provided with the through slot 17 in the shield-can fitting surface 22, so as to fit with the radial extension disk surface 16 to form the radial first fluid channel S1.

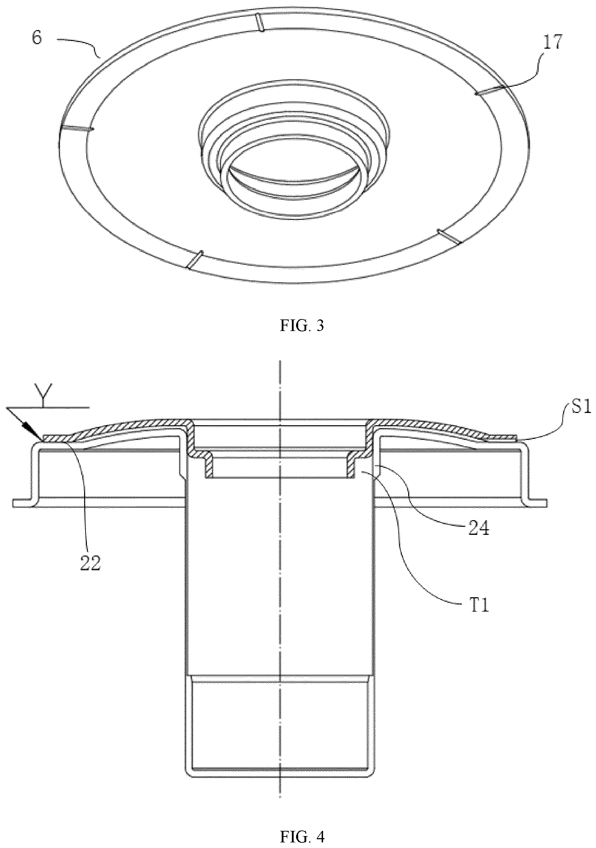

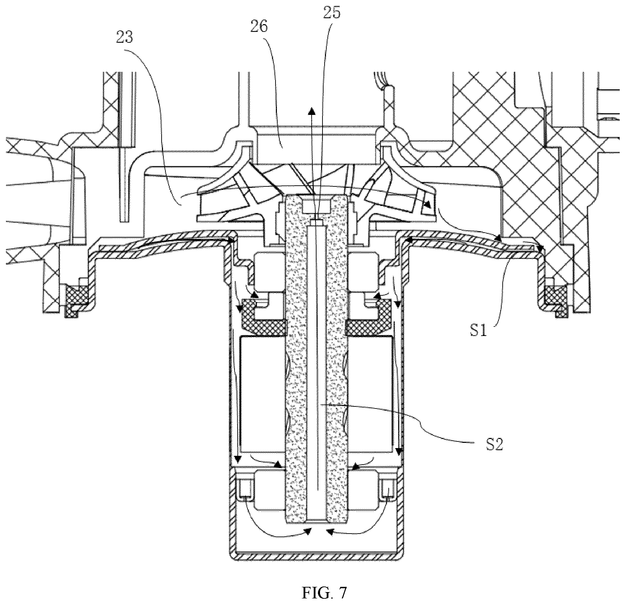

As shown in FIGs. 4 and 7, the through slot 17 in the radial extension disk surface 16 of the bearing support for pump is connected to the pump volute high-pressure region 23 of the pump head assembly 1. When the pump unit is powered on to operate, the rotor assembly 12 rotates, driving the impeller 2 to pump water. The impeller 2 and the pump volute of the pump head assembly 1 jointly cause the liquid to enter the suction opening 26 and then flow out of a pump volute high-pressure region 23. In addition, the liquid in the pump volute high-pressure region 23 of the pump head assembly flows through the first fluid channel S1 into the shield can 5 and fills it up, achieving cooling during operation of the motor and ensuring that the front bearing 7, the rear bearing 10, and the rotor assembly 12 are always immersed in the liquid. When the shield can 5 is filled up, the liquid is discharged from the low-pressure region through the second fluid channel S2 built in the rotary shaft 14.

As shown in FIGs. 2 and 3, the bearing support for pump has a portion, of the radial extension disk surface 16 facing the bearing housing 21, designed as an arched structure, specifically the arched portion 18. The arched portion 18 enhances the overall rigidity of the bearing support 6, reducing deformation of the bearing support 6 under fluid pressure. The bearing support for pump is made of a metal material that is easy to stretch and stamp. The through slot 17 in the radial extension disk surface 16 is manufactured by a metal stamping process, and the arched portion 18, the first flange 19, the second flange 20, and the bearing housing 21 are manufactured by an integral metal stretching process.

As shown in FIG. 4, in the bearing support for pump, the first flange 19 is radially provided with a step avoidance space T1 fitting with a first inner diameter 24 of the shield can 5. The second flange 20 has the bearing housing 21 as a coaxial reference and is in slight clearance fitting with the first inner diameter 24 of the shield can 5. The bearing housing 21 is in interference fitting with the front bearing 7. The deformation of the first flange 19 caused by the interference fitting is accommodated by the step avoidance space T1, thereby ensuring that the slight clearance fitting size between the second flange 20 and the first inner diameter 24 is not interfered with or damaged, achieving concentric assembly of the front bearing 7 and the second flange 20.

FIG. 7 shows the bearing support for pump and the wet-running pump unit with such structure. The rotor assembly 12 is immersed in the liquid in the shield can 5, and the liquid flows through a pinhole 25 provided in a rotary shaft 14 to a suction opening 26 of the pump head assembly 1, forming a second fluid channel S2 for the liquid in the shield can 5.

Compared with the prior art, the present invention improves the manufacturing efficiency, reduces the costs, increases the assembly precision, and enhances the efficiency of liquid inflow into the shield can.

### Embodiment 2

As shown in FIG. 1, a wet-running pump unit with a bearing support for pump is provided, including a pump head assembly 1, an impeller 2, an impeller cover 3, a flat sealing ring 4, a front bearing 7, an axial locking bearing 8, an axial locking bearing rubber sleeve 9, a rear bearing 10, a rear bearing support member 11, a rotor assembly 12, and a stator assembly 13, the rotor assembly includes a rotary shaft 14 and a permanent magnet 15, and the wet-running pump unit further includes the bearing support for pump in Embodiment 1.

The stator assembly 13 is axially fixed to the pump head assembly 1 via the flat sealing ring 4. The stator assembly 13 is fixed to the shield can 5 in both the axial and radial directions. The shield can 5 is fixed to the bearing support 6 and the rear bearing support member 11 in the axial and radial directions, respectively. The shield can 5 is fixed to the pump head assembly 1 in the radial direction. The bearing support 6 and the rear bearing support member 11 are fixed to the front bearing 7 and the rear bearing 10 in the axial and radial directions, respectively. The rotor assembly 12 includes the rotary shaft 14 and is restricted by the front bearing 7 and the rear bearing 10 in the radial direction via the rotary shaft 14. The axial locking bearing 8 is fixed to the rotor assembly by the locking bearing rubber sleeve 9. The rotor assembly 12 is restricted by the axial locking bearing 8 in the axial direction. The impeller 2 and the impeller cover 3 are fixed together by hot-melt welding technology, and the impeller 2 is in interference fitting with the rotary shaft 14.

The above descriptions are only specific implementations of the present invention, but the protection scope of the present invention is not limited thereto. Any person skilled in the art can easily think of various equivalent modifications or substitutions within the technical scope disclosed by the present invention. Modifications or substitutions should be included within the protection scope of the present invention. Therefore, the protection scope of the present invention should be subject to the protection scope of the claims.

## Claims

1. A bearing support for pump, wherein the bearing support is mounted on a wet-running pump unit, and the wet-running pump unit comprises a pump head assembly (1), a shield can (5), a bearing support (6), a front bearing (7), and a rotor assembly (12), wherein the bearing support (6) comprises a radial extension disk surface (16); and
the radial extension disk surface (16) is welding connected to a shield-can fitting surface (22), and the radial extension disk surface (16) or the shield-can fitting surface (22) is provided with a through slot (17) for forming a first fluid channel (S1).

2. The bearing support for pump according to claim 1, wherein the through slot (17) is connected to a pump volute high-pressure region (23) of the pump head assembly (1), and a liquid in the pump volute high-pressure region (23) of the pump head assembly (1) enters the shield can (5) through the first fluid channel (S1) and fills up the shield can (5).

3. The bearing support for pump according to claim 1, wherein the radial extension disk surface (16) is provided with an arched portion (18) that avoids the through slot (17).

4. The bearing support for pump according to claim 2, wherein the rotor assembly (12) is immersed in the liquid in the shield can (5), and the liquid flows through a pinhole (25) provided in a rotary shaft (14) of the rotor assembly (12) to a suction opening (26) of the pump head assembly (1), forming a second fluid channel (S2) for the liquid in the shield can (5).

5. The bearing support for pump according to claim 4, wherein the bearing support for pump further comprises a second flange (20) connected to the arched portion (18), a first flange (19) connected to the second flange (20), and a bearing housing (21) formed by the first flange (19).

6. The bearing support for pump according to claim 5, wherein the first flange (19) is radially provided with a step avoidance space (T1) fitting with a first inner diameter (24) of the shield can (5), and the second flange (20) has the bearing housing (21) as a coaxial reference and is in fitting with the first inner diameter (24) of the shield can (5).

7. The bearing support for pump according to claim 5, wherein the bearing housing (21) is in interference fitting with the front bearing (7), and the front bearing (7) is concentrically assembled with the second flange (20).

8. The bearing support for pump according to claim 5, wherein the radial extension disk surface (16), the through slot (17), the arched portion (18), the first flange (19), the second flange (20), and the bearing housing (21) are components formed through integral metal stamping and drawing.

9. The bearing support for pump according to claim 1, wherein there is one or more through slots (17).

10. A wet-running pump unit with a bearing support, comprising a pump head assembly (1), an impeller (2), an impeller cover (3), a flat sealing ring (4), a shield can (5), a front bearing (7), an axial locking bearing (8), an axial locking bearing rubber sleeve (9), a rear bearing (10), a rear bearing support member (11), a rotor assembly (12), and a stator assembly (13), the rotor assembly comprises a rotary shaft (14) and a permanent magnet (15), and the wet-running pump unit further comprises the bearing support for pump according to any one of claims 1 to 9.
